# EUROPEAN PATENT SPECIFICATION

(11) **EP 2 021 696 B1**
(45) Date of publication and mention of the grant of the patent: **30.12.2015**
(21) Application number: 07748502.7
(22) Date of filing: 21.05.2007
(51) Int. Cl.: F24D 10/00, F24D 19/10

(54) **A METHOD FOR OPTIMIZING THE POWER USAGE IN A DISTRIC HEATING SYSTEM.**
VERFAHREN ZUR OPTIMIERUNG DER ENERGIEVERWENDUNG IN EINEM FERNWÄRMESYSTEM
PROCÉDÉ D'OPTIMISATION DE L'UTILISATION DE L'ÉNERGIE DANS UN RÉSEAU DE CHAUFFAGE URBAIN

(30) Priority: 23.05.2006 SE 0601140
(43) Date of publication of application: 11.02.2009
(73) Proprietor: NODA Intelligent Systems AB, 374 35 Karlshamn (SE)
(72) Inventor: WERNSTEDT, Fredrik, S-371 42 Karlskrona (SE); DAVIDSSON, Paul, S-211 52 Malmö (SE); JOHANSSON, Christian, 238 36 OXIE (SE)
(74) Representative: Karlsson, Leif Gunnar Börje
(86) International application number: PCT/SE2007/050341
(87) International publication number: WO 2007/136344

(56) References cited:
- EP-A1- 1 496 313
- EP-A2- 1 357 336
- WO-A1-02/35154
- DE-A1- 2 655 513
- DE-A1- 3 417 935
- DE-A1- 3 620 929
- DE-A1- 19 604 189
- DE-A1- 19 810 320
- DE-A1- 19 859 364
- GB-A- 1 571 967

## Description

### Technical Field

The present invention concerns a district heating system and more specifically a method for optimizing the power usage.

### Prior Art

Systems are known in which adjacent substations of a district heating system may exchange information to optimise the available energy of the total system.

The energy load within a district heating net is always exposed to strong stochastic variations due to continuously changing demands of the consumers. The capacity of the district heating net must be high enough, to all the time be able to fulfil these demands. In practice this is usually achieved in that all components in the district heating net are given dimensions after some very rarely occurring extreme demands in combination with the use of a special boilers to take care of occurring peak loads.

The largest flows in district heating nets are normally once during early morning and once during early evening. In principle the load normally increases quickly during the early hours of the morning, where after the load increases up to around 20:00, then the load quickly decreases and reach the "night settings" at around 22:00.

The largest monthly cost for the owner of a building is normally the heating cost, which gives a strong incitement to develop technique, giving possibilities to reduce these costs.

DE 198 10 320 A1 discloses the preamble of claim 1 and shows a heating system for heating and/or production of domestic hot water. The system comprises a boiler controlled by a control unit with a temperature program for the heat transferring fluid. Each individual installation comprises load units operated in conjunction with an auxiliary control.

### Summary of the Invention

A district heating system in which the present invention is intended to be used has a central unit and a number of local units. The central unit is either a boiler or an intake from a larger system. The local units, sometimes referred to as substations, are normally one building. Each central unit and local unit (substation) comprises both the equipment for heating and transfer of a medium as well as means for monitoring and control of each unit. The means for monitoring and control comprises computers.

The present invention is developed for control of energy consumption of a number of apartment buildings and/or other buildings connected to a district heating system. One purpose of the present invention is to reduce the overall power consumption of the buildings, and thus to reduce the costs for heating. At the same time the felt comfort levels of the buildings should not be reduced.

The object is to decide which building in a collection of buildings is most suitable for power control in a given point of time. To do this it is necessary to dynamically decide how much the energy content of one building may be lowered without coming below the lowest predetermined level of comfort. The regulation is done by reducing the power intake to one substation at the time.

According to the present invention models and ideas concerning intelligent software agents are used for load handling within a district heating system. Thus, it is possible to comprehensively monitor and control the district heating system. Furthermore, this makes it possible to adapt the energy output to a lower level, without the consumers experiencing a lowered quality of service. The present invention gives an automatic co-operation between all available substations of a group of buildings.

The district heating system has the opportunity to dynamically decide which buildings in a given time that are most suitable for power control. This gives the system a possibility to distribute the power reductions in a fair and optimal way within the group of buildings in the district heating net, in that the buildings having largest capacity to take care of power control are the ones that primarily will conduct the power control. This is made possible in that the substations communicate mutually, and is not possible with power control of each separate substation.

According to the present invention difference is made between regulating and control. According to known technique sub stations are regulated, i.e. one reacts to the outcome after control. We control the sub stations directly, i.e. we use a model of the building where we in advance can calculate ideal control parameters given the current local conditions. Thus, the delivery of energy is controlled based on the calculated energy need in order to satisfy the demands made on comfort.

Tests have shown that it is often better to have many but smaller reductions than fewer and more powerful reductions. The reductions are continuously spread over the buildings that in a given point of time give the largest benefits.

A further possibility is to have pre-heating before larger reductions, e.g. before compensation for night temperature setback in buildings.

It is an advantage that the largest flows normally are during early evening. This means that possible strong reductions will not notably affect the indoor temperature until nighttime.

As the balancing and control of the load within buildings only is based on the use of the thermal mass of the building, the access to hot water for client is in no way influenced.

### Brief Description of the Drawings

The present invention will be described further below with reference to preferred embodiments and the enclosed drawings. In the drawings,
Fig. 1 is an explanatory sketch of a district heating system, in which the present invention may be implemented,
Fig. 2 is an explanatory sketch of a sub station of the system of Fig. 1, and
Fig. 3 is a schematic flow chart of a control system for a district heating system according to the present invention.

### Detailed Description of Preferred Embodiments

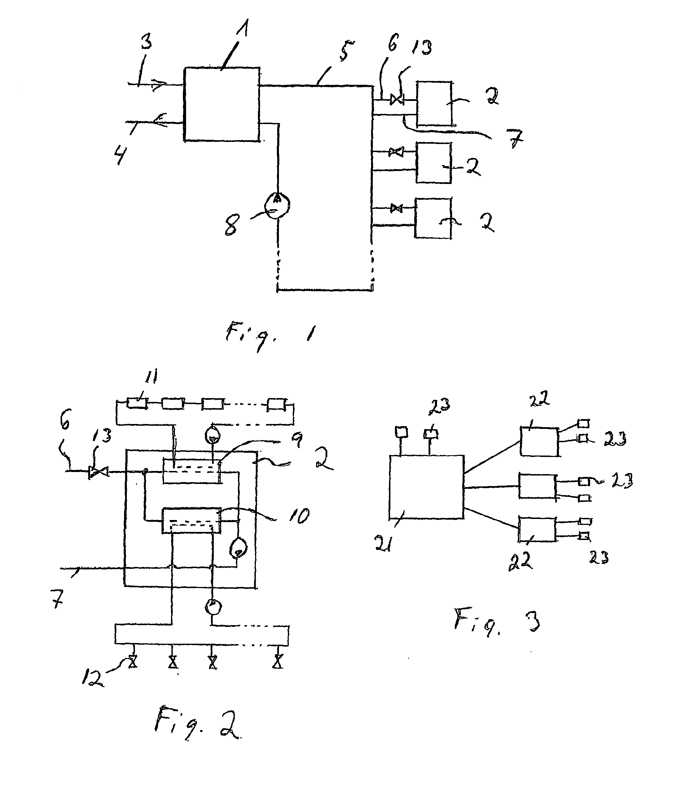

In the example shown in Fig. 1 a district heating system of the present invention is shown. It has a central unit 1. Here the central unit is an intake from a larger system, but a person skilled in the art realises that it my also be a thermal power plant. A number of local units 2 or substations are connected to the central unit 1. Normally each local unit 2 is one apartment building or other building. The central unit 1 takes in a flow of hot liquid, normally water, through a conduit 3 and a return flow leaves the central unit 1 through a conduit 4. The local units 2 are connected to the central unit 1 via a conduit forming a loop 5. Each local unit 2 has a conduit 6 to take in a flow of hot water from the loop 5 and a conduit 7 delivering the return flow to the loop 5. A pump 8 is placed in the loop 5. To control the intake to each local unit 2 a valve 13 is placed in the conduit 6 taking in hot water. The valve 13 may be controlled to increase or decrease the flow of hot water into the local unit 2.

In the example shown in Fig. 2 each local unit 2 has a loop passing two heat exchangers 9, 10. A first heat exchanger 9 takes out energy to heat the building, represented by a number of radiators 11 in the shown example. In other embodiments the radiators are replaced with other heating means such as fans or equipment using hot air. The other, second heat exchanger 10 is used to take out warm water for the hot-water taps 12 of the building. A person skilled in the art realises that the number of radiators 11 and hot-water taps 12 may vary depending of the size and type of building forming a particular local unit 2. It should be understood that the exact design and form of the local units could vary within wide ranges without influencing the present invention.

To control the heating of the entire district heating system a central computer 21 is connected to a local computer 22 at each local unit 2. Both the central computer and each local computer 22 receives signals from several sensors 23, which signals are to be used in the control of the energy consumption. Even though the sensors 23 are shown as connected to only one computer 21,22 each, in other embodiments one or more sensors are connected to two or more computers 21, 22. According to an embodiment which does not form of the invention, all computers may be replaced with one single computer receiving all inputs and making all calculation for the central unit 1 and the local units 2. The sensors 23 may take in different environmental conditions, such as outside temperature, wind, sunshine, clouds, the actual power consumption at the local unit etc. In addition also weather forecasts may be used to predict sudden and/or extreme temperature falls etc. Furthermore, in each local computer 22 a specific time constant is saved, which time constant is a calculated value of how fast the particular building loses energy at different degrees of energy input. As an example in an apartment building in Sweden the time constant was calculated to be about 300h, which means that with an input of 90% of the energy needed it takes about 48h to reduce the indoor temperature of the building 1 °C at an outdoor temperature of -20 °C.

In principle the control system works in the following way. A calculated model is formed of each local unit 2 in each local computer 22. The local unit 2 calculates the energy buffer of the building by initially sense the actual outdoor temperature, an initially predicted, fictive indoor temperature, the actual energy demand of the heating system and the time constant of the building. In calculating the fictive temperature the signals from the sensors 23 are used. Continuously the system will monitor how well the delivered energy satisfies the need of energy given the existing outdoor temperature. Depending on the delivered energy a level of comfort is calculated dynamically for the building, which means that it is possible to continuously decide how much energy that is available for power restriction without coming below a minimal level of comfort of the building. The level of comfort is correlated with the calculated fictive temperature. Other factors that might be used in calculating the fictive temperature of the building are different weather conditions both existing and foreseen.

The overall system normally works after a 24-hour cycle. Between midnight and about six o'clock in the morning the power outtake is relatively constant. The power outtake is normally calculated based on the size of flow in the conduit 3 leading into the central intake 1 and the temperature before and after the local units 2. From that level of power outtake and different sensed or calculated values regarding weather conditions and power outtakes but locally and totally an estimated minimal level for the power outtake, i.e. the flow in conduit 3 out of the central unit 1, during the rest of the 24 hours is calculated. The set minimal level is set based on the predetermined comfort levels of the local units 2. If the power outtake lies above the set minimal level the central computer 21 will ask all local computers 22 if it is possible for the local unit 2 to reduce power outtake temporarily. The central computer 21 may e.g. see the possibility of a reduction of 10% during 15 minutes. The local unit 2 giving the most positive answer, i.e. the local unit 2 having the highest calculated fictive temperature in relation to the comfort level of that particular local unit will be asked to reduce its power outtake. If the central computer 21 notes that a further reduction is possible it will again ask the local computers 22 if it is possible for them to reduce their power outtakes temporarily.

Thus, there is a sort of auction each time the central computer 21 register a possibility of power saving. At each auction only one bidder will be asked to reduce its power outtake. When a local unit 2 has "won" the bidding the local computer 22 will throttle down the valve 13 of the conduit 6 taking in the flow to the local unit 2, e.g. reducing the power outtake locally with 10%. At each auction the local computers 22 will calculate what would happen if the power outtake is restricted e.g. 10% during 15 minutes. Based on that calculation, i.e. the calculated fictive temperature at the end of the 15 minutes period in relation to the set limits for the comfort level, the local computer 22 gives a bid to the central computer 21.

Here a reduction is defined as a lowering in per cent of the set value on the secondary side of the power intake. To avoid power tops the speed at which the set value is allowed to revert to the originally value is limited. It is possible to give limitations locally, e.g. a power restriction of maximal 15% during 20 minutes at the most.

In tests the computers have been connected by means of broadband technique. However, a person skilled in the art realises that any type of communication may be used, such as different wireless techniques.

## Claims

1. A method of regulation of a district heating system, which heating system has a central unit (1), in the form of a central intake or a power plant, and a number of local units (2) receiving hot water from the central unit (1), which local units (2) pick up thermal energy from the water by means of heat exchangers (9, 10), wherein the system has means for monitoring and control of the central unit and the local units, respectively, wherein data from the means for monitoring and control of the central unit
(1) and the local units (2) are used for the regulation, wherein the power outtake of the district heating system is regulated by reduced flow into one selected local unit (2) during a short time period, wherein the means for monitoring and control comprises a central computer (21) at the central unit (1) and a local computer (22) at each local unit
(2) and wherein the central computer (21) and the local computers (22) communicate mutually, **characterized in that** the flow from the central unit (1) is monitored continuously, and that it is not allowed going under a set minimal level and that the central computer (21) continuously will ask the local computers (22) which local unit (2) is best suited for a reduction as long as the flow does not fall below the set minimal level.

2. The method of claim 1, **characterized in that** each local computer (22) will calculate what happens with a fictive temperature at the local unit (2) if the power outtake is reduced a certain per cent for a certain time period, which percentage and time period are based on the question for reduction from the central computer (21) and that the fictive temperature shall correlate with the actual temperature of the local unit (2).

3. The method of claim 2, **characterized in that** the local unit (2) picked for the short term reduction is the one which has the best calculated possibility to cope with such a reduction without coming below a predetermined comfort level, that the local unit (2) picked for reduction will reduce the power intake by calculated portion for a calculated time period by means of the local computer (22) and that the reduction is accomplished by controlling a valve (13) on an intake conduit (6) to the local unit (2).

4. The method of claim 2, **characterized in that** a time constant, i.e. a measure of the ability of a local unit (2) to buffer heat, is used to calculate the fictive temperature, together with at least the outdoor temperature sensed by each local unit (2), the level of flow into the local unit (2) and the temperature before and after the local unit (2) and that sensors (23) are used separately or together by the computers (21, 22).

5. The method of claim 4, **characterized in that** further conditions are brought into the calculations of fictive temperature, such as wind, sunshine, weather forecasts.

6. The method of claim 3, **characterized in that** the comfort level is predetermined for each local unit (2), that the comfort level of each local unit (2) is correlated to the calculated fictive temperature and that the fictive temperature of each local unit (2) is not allowed going under the fictive temperature of the set comfort level.

7. The method of claim 1, **characterized in that** the set minimal level for the flow of the central unit (1) is set to hold the predetermined comfort levels of each local unit (2) based on the flow during a period of relatively stable flow.

8. The method of claim 7, **characterized in that** the minimal level is set based on the calculated fictive temperatures of the local units (2), the flow of the central unit, the outdoor temperature, and possibly other weather conditions or forecasts and that the set minimal level is updated regularly, normally once during a 24 hour period.

## Patentansprüche

1. Verfahren zur Regelung eines Fernwärmesystems, wobei das Wärmesystem eine Zentraleinheit (1) in der Form einer zentralen Zuführung oder eines Kraftwerks und eine Anzahl von lokalen Einheiten (2) umfasst, die Warmwasser aus der Zentraleinheit (1) erhalten, wobei die lokalen Einheiten (2) Wärmeenergie aus dem Wasser mittels Wärmetauscher (9, 10) aufnehmen und wobei das System Mittel zur Überwachung und Steuerung der Zentraleinheit bzw. der lokalen Einheiten aufweist, wobei Daten aus den Mitteln zur Überwachung und Steuerung der Zentraleinheit (1) und der lokalen Einheiten (2) für die Regulierung verwendet werden, wobei die Energieabgabe des Fernwärmesystems durch reduzierten Zufluss in eine ausgewählte lokale Einheit (2) während eines kurzen Zeitraums geregelt wird, wobei die Mittel zur Überwachung und Steuerung einen zentralen Rechner (21) an der Zentraleinheit (1) und einen lokalen Computer (22) an jeder lokalen Einheit (2) umfassen und der zentrale Computer (21) und die lokalen Computer (22) miteinander kommunizieren,
**dadurch gekennzeichnet, dass** der Zufluss von der Zentraleinheit (1) kontinuierlich überwacht wird, wobei nicht zugelassen wird, dass dieser unter einen vorgegebenen Minimalpegel fällt, und dass der Zentralrechner (21) kontinuierlich die lokalen Computer (22) abfragt, welche lokale Einheit (2) sich am besten für eine Verringerung eignet, so lange wie der Zufluss nicht unter den vorgegebenen Minimalpegel abfällt.

2. Verfahren nach Anspruch 1, **dadurch gekennzeichnet, dass** jeder lokale Rechner (22) berechnet, wie sich eine fiktive Temperatur an der lokalen Einheit (2) ändert, wenn die Energieabgabe um einen gewissen Prozentsatz für eine bestimmte Zeitdauer reduziert wird, wobei der Prozentsatz und die Zeitdauer auf der Abfrage nach Reduzierung von dem Zentralcomputer (21) basieren, und dass die fiktive Temperatur mit der tatsächlichen Temperatur der lokalen Einheit (2) korreliert wird.

3. Verfahren nach Anspruch 2, **dadurch gekennzeichnet, dass** die lokale Einheit (2), welche für die kurzfristige Reduktion ausgewählt wird, diejenige ist, welche die beste berechnete Möglichkeit aufweist, eine solche Reduzierung zu bewältigen, ohne unter ein vorbestimmtes Komfortniveau zu gelangen, wobei die zur Reduzierung ausgewählte lokale Einheit (2) die Energieaufnahme um einen berechneten Anteil für eine berechnete Zeitdauer mit Hilfe des lokalen Computers (22) reduziert, und dass die Reduktion durch Steuern eines Ventils (13) an einer Einlassleitung (6) zur lokalen Einheit (2) erfolgt.

4. Verfahren nach Anspruch 2, **dadurch gekennzeichnet, dass** eine Zeitkonstante, d. h. ein Maß für die Fähigkeit einer lokalen Einheit (2) zur Wärmepufferung, verwendet wird, um die fiktive Temperatur zu berechnen, zusammen mit zumindest der durch jede lokale Einheit (2) erfassten Außentemperatur (2), dem Zuflussniveau zu der lokalen Einheit (2) und der Temperatur vor und nach der lokalen Einheit (2), wobei Sensoren (23) getrennt oder gemeinsam mit den Computern (21, 22) verwendet werden.

5. Verfahren nach Anspruch 4, **dadurch gekennzeichnet, dass** weitere Bedingungen, wie Wind, Sonne, Wettervorhersagen, in die Berechnungen der fiktiven Temperatur eingebracht werden.

6. Verfahren nach Anspruch 3, **dadurch gekennzeichnet, dass** das Komfortniveau für jede lokale Einheit (2) vorgegeben ist, dass das Komfortniveau jeder lokalen Einheit (2) mit der errechneten fiktiven Temperatur korreliert wird und die fiktive Temperatur jeder lokalen Einheit (2) nicht unter die fiktive Temperatur des eingestellten Komfortniveaus fallen darf.

7. Verfahren nach Anspruch 1, **dadurch gekennzeichnet, dass** der eingestellte Minimalpegel für den Zufluss von der Zentraleinheit (1) so eingestellt ist, dass die vorbestimmten Komfortniveaus jeder lokalen Einheit (2) auf der Basis der Strömung während einer relativ konstanten Strömung eingehalten wird.

8. Verfahren nach Anspruch 7, **dadurch gekennzeichnet, dass** der Minimalpegel basierend auf den berechneten fiktiven Temperaturen der lokalen Einheiten (2), der Strömung von der Zentraleinheit, der Außentemperatur und möglicherweise anderen Wetterbedingungen oder Wettervorhersagen eingestellt wird und dass der eingestellte Minimalpegel regelmäßig aktualisiert wird, in der Regel einmal während eines Zeitraums von 24 Stunden.

## Revendications

1. Procédé de régulation d'un système de chauffage urbain, lequel système de chauffage présente une unité centrale (1) sous la forme d'un point de prélèvement central ou d'une centrale électrique, et un nombre d'unités locales (2) recevant de l'eau chaude de l'unité centrale (1), lesquelles unités locales (2) prélèvent de l'énergie thermique de l'eau à l'aide d'échangeurs de chaleur (9, 10), dans lequel le système présente des moyens de surveillance et de contrôle respectivement de l'unité centrale et des unités locales, dans lequel des données provenant des moyens de surveillance et de contrôle de l'unité centrale (1) et des unités locales (2) sont utilisées pour la régulation, dans lequel la voie de sortie du système de chauffage urbain est régulée par le flux réduit dans une unité locale sélectionnée (2) pendant une brève période de temps, dans lequel les moyens de surveillance et de contrôle comprennent un ordinateur central (21) sur l'unité centrale (1) et un ordinateur local (22) sur chaque unité locale (2) et dans lequel l'ordinateur central (21) et les ordinateurs locaux (22) communiquent mutuellement, **caractérisé en ce que** le flux de l'unité centrale (1) est surveillé en continu, et **en ce qu'**il n'est pas autorisé à descendre sous un niveau minimum défini et **en ce que** l'ordinateur central (21) demandera en continu aux ordinateurs locaux (22) laquelle unité locale (2) est mieux adaptée pour une réduction tant que le flux ne tombe pas sous le niveau minimum défini.

2. Procédé selon la revendication 1, **caractérisé en ce que** chaque ordinateur local (22) calculera ce qu'il arrivera avec une température fictive sur l'unité locale (2) si la voie de sortie est réduite d'un certain pourcentage pour une certaine période de temps, lequel pourcentage et laquelle période de temps sont basés sur la question de la réduction de l'ordinateur central (21) et **en ce que** la température fictive devrait être en corrélation avec la température réelle de l'unité locale (2).

3. Procédé selon la revendication 2, **caractérisé en ce que** l'unité locale (2) prélevée pour la réduction à court terme est l'une qui a la meilleure possibilité calculée pour faire face à une telle réduction sans venir sous un niveau de confort prédéterminé, **en ce que** l'unité locale (2) prélevée pour la réduction réduira le point de prélèvement d'une part calculée pour une période de temps calculée à l'aide de l'ordinateur local (22) et **en ce que** la réduction est accomplie par le contrôle d'une valve (13) sur un conduit de prélèvement (6) vers l'unité locale (2).

4. Procédé selon la revendication 2, **caractérisé en ce qu'**une constante de temps, c'est-à-dire une mesure de la capacité d'une unité locale (2) pour accumuler de la chaleur, est utilisée pour calculer la température fictive conjointement avec au moins la température extérieure détectée par chaque unité locale (2), le niveau de flux dans l'unité locale (2) et la température avant et après l'unité locale (2) et **en ce que** des capteurs (23) sont utilisés séparément ou conjointement par les ordinateurs (21, 22).

5. Procédé selon la revendication 4, **caractérisé en ce que** d'autres conditions sont considérées dans les calculs de température fictive telles que le vent, le soleil, les prévisions météorologiques.

6. Procédé selon la revendication 3, **caractérisé en ce que** le niveau de confort est prédéterminé pour chaque unité locale (2), **en ce que** le niveau de confort de chaque unité locale (2) est en corrélation avec la température fictive calculée et **en ce que** la température fictive de chaque unité locale (2) n'est pas autorisée à descendre sous la température fictive du niveau de confort défini.

7. Procédé selon la revendication 1, **caractérisé en ce que** le niveau minimum défini pour le flux de l'unité centrale (1) est défini pour maintenir les niveaux de confort prédéterminés de chaque unité locale (2) sur la base du flux pendant une période de flux relativement stable.

8. Procédé selon la revendication 7, **caractérisé en ce que** le niveau minimum est défini sur la base des températures fictives calculées des unités locales (2), du flux de l'unité centrale, de la température extérieure et éventuellement d'autres conditions ou prévisions météorologiques et **en ce que** le niveau minimum défini est mis à jour régulièrement, normalement une fois pendant une période de 24 heures.
